# FASCICULE DE BREVET EUROPEEN

(11) **EP 2 766 872 B1**
(45) Date de publication et mention de la délivrance du brevet: **29.07.2015**
(21) Numéro de dépôt: 12769446.1
(22) Date de dépôt: 09.10.2012
(51) Int. Cl.: G06T 7/00

(54) **PROCEDE D'ETALONNAGE D'UN SYSTEME DE VISION PAR ORDINATEUR EMBARQUE SUR UN MOBILE**
VERFAHREN ZUR KALIBRIERUNG EINES COMPUTERGESTÜTZTEN SICHTSYSTEMS AN BORD EINES FAHRZEUGS
METHOD OF CALIBRATING A COMPUTER-BASED VISION SYSTEM ONBOARD A CRAFT

(30) Priorité: 10.10.2011 FR 1159135
(43) Date de publication de la demande: 20.08.2014
(73) Titulaire: Université Blaise Pascal Clermont II, 63006 Clermont Ferrand Cedex 1 (FR); Universite d'Auvergne Clermont I, 63000 Clermont Ferrand (FR); Centre National de la Recherche Scientifique (CNRS), 75016 Paris (FR)
(72) Inventeur: DHOME, Michel, F-63430 Pont Du Chateau (FR); ROYER, Eric, F-63800 Saint Georges sur Allier (FR); LHUILLIER, Maxime, F-63000 Clermont-Ferrand (FR); RAMADASAN, Datta, F-63122 Ceyrat (FR); KARAM, Nadir, F-63000 Clermont-Ferrand (FR); DEYMIER, Clément, F-63400 Chamalières (FR); LITVINOV, Vadim, F-63000 Clermont-Ferrand (FR); HADJ ABDELKADER, Hicham, F-91000 Evry (FR); CHATEAU, Thierry, F-63460 Combronde (FR); LAVEST, Jean-Marc, F-63200 Riom (FR); MARMOITON, François, F-63260 Bussières et Pruns (FR); ALIZON, Serge, F-63730 Les Martres de Veyre (FR); MALATERRE, Laurent, F-63730 Mirefleurs (FR); LEBRALY, Pierre, F-63620 Giat (FR)
(74) Mandataire: Myon, Gérard Jean-Pierre
(86) Numéro de dépôt international: PCT/EP2012/069958
(87) Numéro de publication internationale: WO 2013/053701

(56) Documents cités:
- MOURAGNON E ET AL: "3D reconstruction of complex structures with bundle adjustment: an incremental approach", ROBOTICS AND AUTOMATION, 2006. ICRA 2006. PROCEEDINGS 2006 IEEE INTERN ATIONAL CONFERENCE ON ORLANDO, FL, USA MAY 15-19, 2006, PISCATAWAY, NJ, USA,IEEE, 15 mai 2006 (2006-05-15), pages 3055-3061, XP010921728, DOI: 10.1109/ROBOT.2006.1642166 ISBN: 978-0-7803-9505-3 cité dans la demande
- FRIEDRICH FRAUNDORFER ET AL: "A constricted bundle adjustment parameterization for relative scale estimation in visual odometry", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3 mai 2010 (2010-05-03), pages 1899-1904, XP031743668, ISBN: 978-1-4244-5038-1

## Description

La présente invention et le travail correspondant ont bénéficié d'une aide de l'État gérée par l'Agence Nationale de la Recherche au titre du programme Investissements d'avenir dans le cadre du projet LabEx IMobS3 (ANR-10-LABX-16-01), d'une aide de l'Union Européenne au titre du Programme Compétitivité Régionale et Emploi 2007-2013 (FEDER - Région Auvergne) et d'une aide de la Région Auvergne.

La présente invention concerne un procédé d'étalonnage d'un système de vision par ordinateur embarqué sur un mobile, comprenant un ensemble rigide de caméras possédant des paramètres extrinsèques et des paramètres intrinsèques.

Il est possible d'utiliser un système de vision par ordinateur comprenant un ensemble rigide de caméras synchronisées pour déterminer une reconstruction 3D d'un environnement dans lequel évolue un mobile.

Il est possible d'utiliser un tel système de vision par ordinateur pour le guidage d'un mobile autoguidé, conçue pour se servir des images prises par le système de vision par ordinateur pour se déplacer, par exemple le long d'une trajectoire de référence apprise.

Pour ce faire, il est possible d'utiliser un procédé de reconstruction 3D à partir d'images prise par le système de vision par ordinateur en mouvement (« Structure From Motion » en anglais désigné par l'acronyme « SFM »).

Dans un tel procédé, dans une étape d'apprentissage, un opérateur peut commander le déplacement du mobile le long d'une trajectoire de référence. Le mobile peut également être commandé automatiquement sans opérateur en exécutant des mouvements préenregistrés. Au cours du déplacement, le système de vision par ordinateur capture des images de l'environnement, chaque image correspondant à une pose du système de vision par ordinateur. Chaque image comprend une matrice de points 2D ou pixels, chacun défini par sa position dans la matrice et d'autres paramètres telles que la couleur ou l'intensité. Une pose définit la position et l'orientation du système de vision par ordinateur dans un repère euclidien pouvant être global ou local (relativement à une pose voisine) ainsi que sa translation dans ledit repère euclidien. La position est exprimée par trois paramètres de translation correspondant aux coordonnées suivant les axes dudit repère et l'orientation est exprimée par exemple par trois angles (angles d'Euler) par rapport audit repère.

Le système de vision par ordinateur identifie des amers 2D caractéristiques sur chaque image, apparie des amers 2D caractéristiques entre les images (« template matching » en anglais) et reconstruit à partir des amers 2D appariés une cartographie 3D comprenant les paramètres des amers 3D de l'environnement correspondant aux amers 2D appariés et les paramètres de poses du système de vision par ordinateur correspondant aux images utilisées pour la reconstruction, associées à des amers 3D potentiellement visibles par le système de vision par ordinateur lorsqu'il est dans cette pose. La cartographie 3D peut également associer à chaque point 3D une zone d'intérêt entourant le point.

Les amers 3D et les amers 2D peuvent notamment être des points 3D et des points 2D (issus des images). Les paramètres des points 3D sont les coordonnées de position des points 3D, permettant de localiser chaque point 3D dans l'espace.

Les paramètres de poses sont pour chaque pose les paramètres de translation et les paramètres de rotation définissant la pose.

L'ensemble de caméras comprend des paramètres extrinsèques qui sont les paramètres des transformations rigides permettant de passer du repère d'une caméra au repère d'une autre caméra de l'ensemble de caméras. La transformation rigide permettant de passer d'une caméra à une autre caméra peut être définie par trois paramètres de translation et trois paramètres de rotation dans le repère euclidien, soit six paramètres.

L'ensemble de caméras comprend des paramètres intrinsèques propres à chaque caméra. Dans un modèle sténopé de caméra, les paramètres intrinsèques peuvent comprendre notamment la focale, la position du point principal, le centre de l'image et les coefficients de distorsion.

Le document MOURAGNON et al, « 3D reconstruction of complex structures with bundle adjustment: an incremental approach », PROCESSING IEEE INTERNATIONAL CONFERENCE ON ROBOTICS AND AUTOMATION, ICRA.ORLANDO, FL, USA, May 15-19, 2006, PISCATAWAY, NJ, USA, IEEE, 15 mai 2006, pages 3055-3061, DOI: 10.1109/ROBOT.2006.1642166, ISBN: 978-0-7803-9505-3, divulgue, pour un système de vision monoculaire, un algorithme de reconstruction traitant les images obtenues par une camera étalonnée, c'est-à-dire dont les paramètres sont considérés comme constants au cours de la reconstruction.

Le document FRAUNDORFER et al, « A constricted bundle adjustment parametrization for relative scale estimation in visual odometry », IEEE INTERNATIONAL CONFERENCE ON ROBOTICS ANS AUTOMATION, ICRA 2010, ANCHORAGE, ALASKA, USA, 3 - 8 May 2010, IEEE, PISCATAWAY, NJ, USA, 3 mai 2010, pages 1899 - 1904, ISBN: 978-1-4244-5038-1, divulgue un procédé d'estimation du paramètre intrinsèque d'échelle d'une caméra, à partir d'un modèle dans lequel les paramètres de déplacement sont séparés du paramètre intrinsèque d'échelle, et comportant une première étape d'estimation des paramètres de déplacement et une seconde étape d'estimation du paramètre intrinsèque d'échelle, cette dernière faisant intervenir une étape d'optimisation par ajustement de faisceau.

Or, la précision de la cartographie 3D et du guidage du mobile à partir de la cartographie 3D dépend de la connaissance précise des paramètres extrinsèques et des paramètres intrinsèques.

Un des buts de l'invention est donc de fournir un procédé d'étalonnage permettant d'estimer avec précision les paramètres extrinsèques et/ou les paramètres intrinsèques de l'ensemble de caméras, qui soit rapide à mettre en oeuvre.

A cet, effet, l'invention propose un procédé d'étalonnage d'un système de vision par ordinateur embarqué sur un mobile, un produit et un dispositif, conformes aux revendications.

L'invention et ses avantages seront mieux compris à la lecture de la description qui va suivre, donnée uniquement à titre d'exemple et faite en référence aux dessins annexés, sur lesquels :
- la Figure 1 est une vue schématique de côté d'un mobile autoguidé comprenant un système de vision par ordinateur à deux caméras permettant la mise en oeuvre du procédé selon l'invention ;
- la Figure 2 est une vue schématique d'un modèle du système de vision ; et
- la Figure 3 est un diagramme bloc illustrant une étape d'agrégation de cartographie 3D de séquences élémentaires par fusion hiérarchique ascendante pour une cartographie 3D de la séquence complète incluant toutes les séquence élémentaires ;

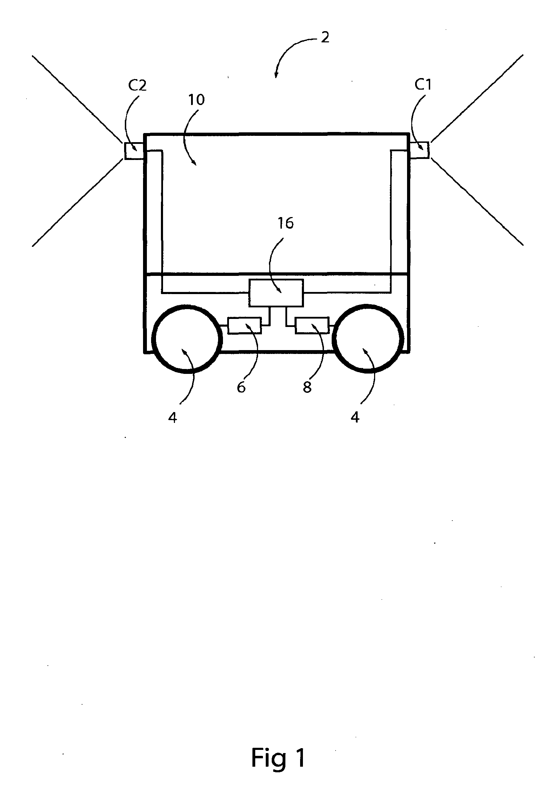

Le mobile 2 illustré sur la Figure 1 est un mobile autoguidé (« autoguided vehicle » en anglais désigné par l'acronyme « AGV »). Il comprend des roues 4, incluant au moins une roue directrice, un système de direction 6 pour commander le braquage de chaque roue directrice, un système d'entraînement 8 accouplé à au moins une des roues 4 pour faire avancer ou reculer le mobile 2 et un système de vision par ordinateur 10 pour commander le système de direction 6 et le moteur 8 de manière à commander le déplacement du mobile, de telle manière que le mobile puisse se déplacer de manière autonome.

Le système de vision par ordinateur 10 comprend un ensemble de caméras C₁, C₂ synchronisées de manière à capturer des images simultanément. L'ensemble de caméras est rigide : les caméras C₁, C₂ sont liées rigidement entre elles et sont donc immobiles les unes par rapport aux autres.

Les caméras C₁, C₂ sont disposées sur le mobile 2 de manière à prendre des images de l'environnement du mobile. Les caméras C₁, C₂ sont orientées de telle manière que leurs champs de vision sont séparés ou non chevauchant : la scène visible par chaque caméra est invisible par l'autre caméra dans une pose donnée de l'ensemble de caméras.

Dans l'exemple illustré, le système de vision par ordinateur 10 comprend deux caméras : une caméra C₁ avant fixée sur le mobile 2 de manière à prendre des images vers l'avant du mobile 2 et une caméra arrière C₂ fixée sur le mobile 2 de manière à prendre des images vers l'arrière du mobile 2.

Le système de vision par ordinateur 10 comprend un module de traitement d'information 16 propre à recevoir et traiter les images numériques capturée par le système de vision par ordinateur 10 pour déterminer la position du mobile 2 et à commander le système de direction 6 et le système d'entraînement 8 de façon à déplacer le mobile 2.

Le module de traitement d'information 16 est programmé pour la mise en oeuvre d'un procédé selon l'invention. Le module de traitement d'information 16 comprend un calculateur et une mémoire dans laquelle est stocké un produit programme d'ordinateur comprenant des instructions logicielles qui lorsqu'elles sont mise en oeuvre par le module de traitement d'information, mettent en oeuvre un procédé d'étalonnage de l'invention.

Dans la suite de la description, sauf précision contraire, une image désigne une image de l'environnement fournie par le système de vision par ordinateur 10 et regroupant les images fournies individuellement par chaque caméra C₁, C₂, et une pose désigne une pose du système de vision par ordinateur 10.

Chaque caméra C₁, C₂ possède des paramètres intrinsèques. Les paramètres intrinsèques influent sur la correspondance entre l'environnement réel et l'image correspondante fournie par la caméra C₁, C₂. Les paramètres intrinsèques d'une caméra peuvent comprendre notamment la focale, la position du point principal, le centre de l'image et les coefficients de distorsion.

L'ensemble de caméra comprend des paramètres extrinsèques. Ces paramètres extrinsèques déterminent la relation entre les poses des caméras C₁, C₂ qui sont liées rigidement entre elles.

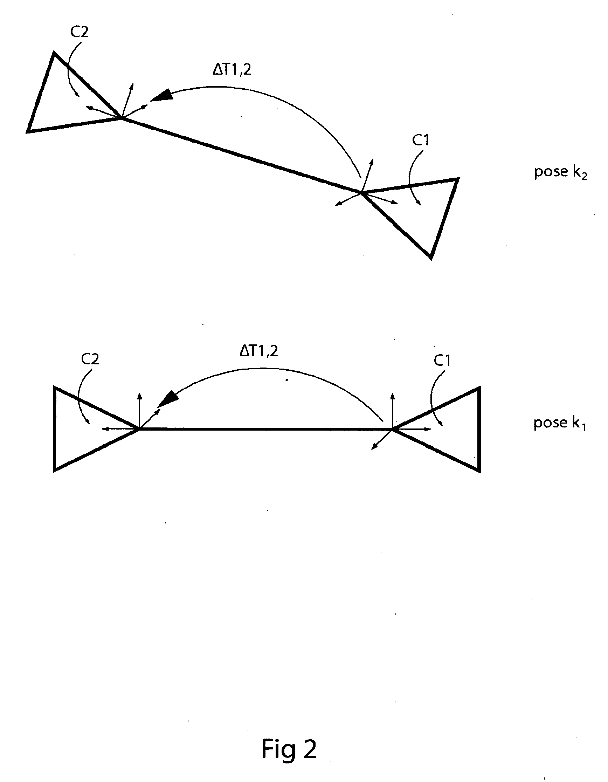

Comme illustré sur la Figure 2, chaque caméra C₁, C₂ est liée à un repère individuel, et, de manière générale, pour chaque pose du système de vision par ordinateur 10, il existe une transformation rigide ΔT_{i,j} permettant de passer du repère de la caméra Cᵢ à celui de la caméra Cⱼ.

Dans le cas illustré de deux caméras C₁, C₂, il existe une transformation rigide ΔT_{1,2} permettant de passer du repère de la caméra C₁ à celui de la caméra C₂.

Chaque transformation rigide ΔT_{i,j} entre deux caméras peut être définie par une translation Δt_{i,j} permettant de passer d'une caméra à l'autre et d'une rotation ΔR_{i,j} permettant de passer de l'orientation d'une caméra à l'autre. La translation Δt_{i,j} est déterminée par trois paramètres correspondant aux translations selon les trois axes d'un repère euclidien lié à la caméra Ci, et la rotation ΔR_{i,j} est déterminée par trois paramètres correspondant aux rotations autour des trois axes du repère euclidien lié à la caméra Cᵢ.

Le procédé d'étalonnage comprend une reconstruction d'une cartographie 3D de l'environnement du mobile 2 en mouvement (« Structure From Motion » en anglais désigné par l'acronyme « SFM »).

Selon le procédé d'étalonnage, on acquière des images numériques capturées par le système de vision par ordinateur 10 lors du déplacement du mobile 2 le long d'une trajectoire, chaque image correspondant à une pose du système de vision par ordinateur 10 le long de la trajectoire. Dans un mode de réalisation, un opérateur commande le déplacement du mobile 2 le long de la trajectoire, et, au cours du déplacement, le système de vision par ordinateur 10 capture des images numériques de l'environnement.

Chaque image capturée par le système de vision par ordinateur 10 comprend une matrice de pixels ou points 2D. Chaque point 2D est défini notamment par sa position dans la matrice.

Le procédé d'étalonnage comprend une étape de reconstruction d'une cartographie 3D, comprenant des amers 3D de l'environnement, des poses du système de vision par ordinateur 10, en associant à chaque pose un ensemble d'amers 3D potentiellement visibles par le système de vision par ordinateur 10. Les amers potentiellement visibles peuvent être associé à chaque caméra de manière à déterminer quels amers 3D sont potentiellement visibles par quelle caméra dans chaque pose du système de vision par ordinateur.

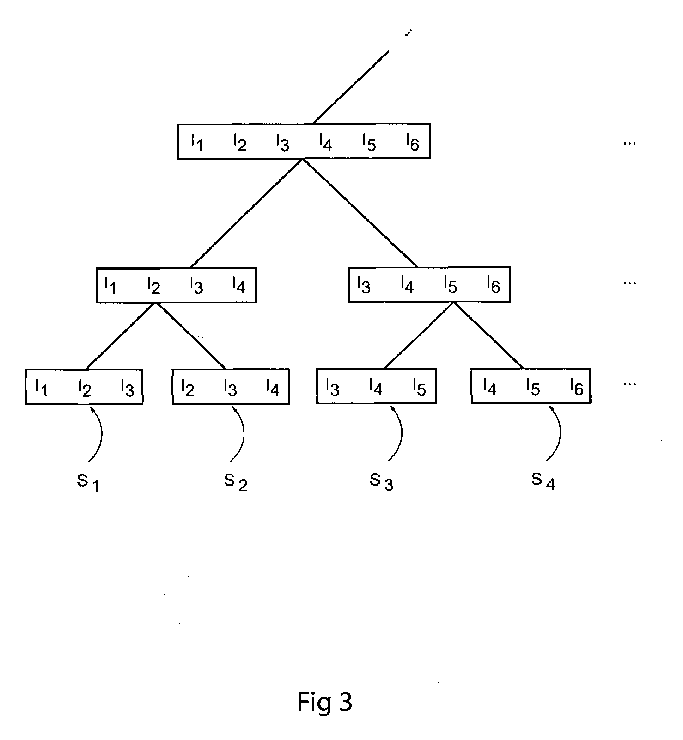

Dans un mode de réalisation, comme illustré sur la Figure 3, on regroupe les images en séquences élémentaires Si, chaque séquence élémentaire Si comprenant un nombre X d'images li voisines avec un recouvrement de Y images entre deux séquences élémentaires successives (deux séquences élémentaires successives possèdent Y images en commun). Dans un mode de réalisation chaque séquence élémentaire comprend X = 3 images li avec un recouvrement de Y = 2 images.

Par « images voisines », on entend des images correspondant à des poses proches du système de vision par ordinateur 10, de telle manière que ces images se recouvrent et puissent posséder des amers 2D susceptibles d'être appariés.

Le procédé d'étalonnage comprend la reconstruction d'une cartographie 3D à partir de chaque séquence élémentaire Sᵢ.

Dans un mode de mise en oeuvre possible, on calcule la cartographie 3D de la première séquence élémentaire S₁ par calcul de géométrie épipolaire et triangulation d'amers, puis on calcule les cartographies 3D des séquences élémentaires Sᵢ (i >1) suivantes de proche en proche à partir de celle de la première séquence élémentaire S₁.

Le calcul de géométrie épipolaire permet de déterminer les poses du système de vision par ordinateur 10 correspondant aux images de la première séquence élémentaire S₁. Une pose est définie par trois paramètres de translation et trois paramètres de rotation dans le repère euclidien global ou local (relativement à une pose voisine). La triangulation permet de déterminer les paramètres des amers 3D (i.e. les coordonnées tridimensionnelles pour des amers 3D) correspondant aux amers 2D appariés entre les images de la première séquence élémentaire S₁. Les paramètres d'un point 3D sont les paramètres de translation dans le repère euclidien global ou local relativement à une pose d'où le point a été observé.

Le calcul de la géométrie épipolaire est effectué de manière connue, par exemple par identification d'amers 2D caractéristiques dans les images de la séquence, par exemple par la méthode des coins de Harris, appariement des amers 2D caractéristiques entre les images de la séquence, calcule des poses du système de vision par ordinateur 10, par exemple par mise en oeuvre d'un algorithme de type RANSAC sur deux poses et extrapolation de la troisième pose.

Le calcul de la triangulation des amers 2D appariés est effectué de manière connue, par exemple par une méthode du point milieu. La triangulation permet d'obtenir des amers 3D, c'est-à-dire de déterminer pour des amers 2D appariés un point 3D de l'environnement avec ses coordonnées tridimensionnelles dans le repère euclidien global.

Pour la reconstruction de la cartographie 3D d'une séquence élémentaire à partir de la séquence élémentaire précédente, on détecte des amers 2D caractéristiques dans l'image supplémentaire de la séquence élémentaire, on détermine la pose correspondante du système de vision par ordinateur 10 sur la base de ces amers 2D caractéristiques appariés avec des amers 2D caractéristiques des poses du système de vision par ordinateur 10 déjà calculées dans la cartographie 3D de la séquence élémentaire précédente, puis on triangule les amers 2D appariés supplémentaires.

Toutes les séquences élémentaires sont ainsi reconstruites de proche en proche.

Chaque cartographie 3D de chaque séquence élémentaire Sᵢ est optimisée par mise en oeuvre d'un algorithme d'ajustement de faisceaux. Un algorithme d'ajustement de faisceaux est un algorithme itératif permettant d'optimiser les différents paramètres entrant dans le calcul de la cartographie 3D, par convergence d'un critère qui est généralement la minimisation d'une fonction de coût. Les paramètres entrant dans le calcul d'une cartographie 3D à partir d'images prises par un ensemble de caméras comprennent les paramètres d'amers 3D, les paramètres des poses du système de vision par ordinateur, les paramètres extrinsèques du système de vision par ordinateur et les paramètres intrinsèques du système de vision par ordinateur. Un paramètre considéré comme variable lors de l'optimisation sera estimé et un paramètre considéré comme constant ou fixe ne sera pas optimisé ou estimé.

Le procédé d'étalonnage comprend l'optimisation de la cartographie 3D de chaque séquence élémentaire Sᵢ par ajustement de faisceaux en considérant les paramètres extrinsèques comme constants.

Le procédé d'étalonnage comprend l'agrégation des cartographies 3D des séquences élémentaires Sᵢ pour obtenir la cartographie 3D de la séquence complète S.

Dans un mode de réalisation, comme illustré sur la Figure 3, l'agrégation est réalisée par mise en oeuvre d'un procédé d'agrégation hiérarchique ascendant en partant des séquences élémentaires Sᵢ définissant un premier niveau. Le passage d'un niveau au niveau supérieur est effectué par fusion des cartographies 3D du niveau par paire et optimisation par ajustement de faisceaux de chaque cartographie 3D résultant de la fusion, de telle manière que le nombre de cartographie 3D est divisé par 2 en passant d'un niveau au niveau supérieur. Cet étape élémentaire d'agrégation est mise en oeuvre à chaque niveau jusqu'à reconstruire la séquence complète S.

L'optimisation par ajustement de faisceaux de chaque cartographie 3D résultant d'une fusion de deux cartographies 3D du niveau inférieur est effectuée en considérant les paramètres extrinsèques constants.

Les algorithmes mis en oeuvre pour la reconstruction des cartographies 3D incluent avantageusement un procédé de minimisation de l'influence des amers aberrants. Dans un mode de réalisation, si l'erreur reprojection d'un amer 3D visible dans une pose par une caméra est supérieure à un seuil, l'amer 2D correspondant est rejeté. Les amers 2D caractéristiques sont ainsi classés sélectivement en amers aberrants (« outliers » en anglais) et en amers valides (« inliers » en anglais).

La cartographie 3D de la séquence complète S est optimisée par ajustement de faisceaux en considérant au moins un des paramètres extrinsèques variables. La cartographie 3D de la séquence complète est ainsi optimisée en optimisant les paramètres extrinsèques, les amers 3D et les poses du système de vision par ordinateur 10. L'optimisation est effectuée par exemple par mise en oeuvre d'un algorithme d'ajustement de faisceaux basé sur une technique d'optimisation du type Levenberg-Marquardt.

Avantageusement, le procédé d'étalonnage comprend une étape de détection de fermeture de boucle, pour détecter et réduire des dérives dans les reconstructions des cartographies 3D.

La détection de fermeture de boucle permet de détecter des amers 3D caractéristiques observés dans une première pose et dans une deuxième pose du système de vision par ordinateur, avec ou sans permutation des caméras.

Dans le cas de deux caméras C₁, C₂ orientées dans des directions opposées, une fermeture de boucle sans permutation correspond à une rotation à 360°, par exemple du fait du déplacement du mobile 2 suivant un cercle, et une fermeture de boucle avec permutation correspond à une rotation de 180°, par exemple du fait d'un demi-tour.

Pour prendre en compte une fermeture de boucle avec permutation, les images de chaque caméra et les poses des caméras sont traitées individuellement.

Pour détecter une fermeture de boucle, pour une pose d'une caméra déterminée, on vérifie l'existence d'une pose précédente (de cette caméra déterminée ou d'une autre caméra) vérifiant un critère de proximité indiquant que la pose précédente est suffisamment proche. Pour ce faire, on peut vérifier si la distance entre les positions de deux poses de caméra est inférieure à un seuil de distance et si l'angle de rotation pour passer de l'orientation d'une pose à l'orientation de l'autre est inférieur à un seuil d'angle.

Lorsqu'une pose de caméra proche existe, on apparie les amers 2D caractéristiques des images associées à ces poses de caméra, et si le nombre de point 2D appariés est supérieur à un nombre déterminé, on ajoute une observation associée aux amers 2D appariés. L'observation est par exemple l'ajout des amers 2D appariés aux poses précédentes de la caméra déterminée, ce qui augmente le nombre d'amers 2D appariés avec des amers 2D appariés fiables. Dans un mode de réalisation, les amers 2D peuvent être appariés par mise en oeuvre d'un algorithme de type RANSAC.

Dans un mode de réalisation, la détection de boucle est effectuée pour chaque pose de chaque caméra.

Dans le mode de mise en oeuvre décrit précédemment, les paramètres extrinsèques sont considérés comme constants lors de l'optimisation des cartographies 3D des séquences élémentaires Sᵢ et de leur agrégation pour obtenir la cartographie 3D de la séquence complète S, et ne sont considérés comme variables et donc optimisés que lors de l'optimisation par ajustement de faisceaux de la cartographie 3D de la séquence complète S.

Ainsi, on optimise les cartographies 3D des séquences élémentaires en considérant au moins un paramètre extrinsèque comme constant et on optimise la cartographie 3D de la séquence complète plus longue que chaque séquence élémentaire et incluant chaque séquence élémentaire, en considérant au moins ledit paramètre extrinsèque comme variable de manière à l'estimer.

Par ailleurs, les séquence élémentaires Sᵢ et les séquences intermédiaires sont des séquences partielles comprenant chacune seulement une partie des images de la séquence complète S. Chaque cartographie 3D d'une séquence partielle est optimisée en considérant les paramètres extrinsèques comme constants.

En variante, il est possible de considérer au moins certains paramètres extrinsèques comme variables au cours de l'agrégation des cartographies 3D des séquences élémentaires.

Ainsi, on optimise au moins une cartographie 3D d'une séquence intermédiaire plus longue et englobant une séquence élémentaire en considérant au moins un paramètre extrinsèque ou chaque paramètre extrinsèque comme variable de manière à l'estimer.

Il est possible d'effectuer des optimisations de cartographie 3D de plusieurs séquences de longueur croissante englobant chacune les précédentes en considérant au moins un paramètre extrinsèque constant, puis d'effectuer l'optimisation d'une cartographie 3D de la séquence suivante englobant les précédentes en considérant ledit paramètre extrinsèque comme variable de manière à l'estimer.

L'optimisation par ajustement de faisceaux des paramètres extrinsèques sera efficace et pourra converger rapidement vers une solution précise en fonction des mouvements du système de vision par ordinateur 10.

Dans un mode de réalisation possible, si la reconstruction d'une cartographie 3D d'une séquence met en évidence un mouvement du système de vision par ordinateur 10, l'optimisation de la cartographie 3D de la dite séquence est effectuée en considérant des paramètres extrinsèques comme variables en fonction du mouvement détecté.

Les critères suivants peuvent être appliqués.

Si le mouvement détecté est un mouvement en ligne droite, les paramètres extrinsèques de translation sont considérés constants à la valeur initiale ou à une valeur estimée préalablement, et au moins un paramètre extrinsèque de rotation est considéré comme constant lors de l'optimisation de la cartographie 3D. Dans un mode de mise en oeuvre, le paramètre de la rotation autour de la direction de déplacement en ligne droite est considéré comme constant.

Si le mouvement détecté est un mouvement dans un plan horizontal non rectiligne, les paramètres extrinsèques de translation sauf la translation verticale, sont considérés comme variables, et les paramètres extrinsèques de rotation sont considérés comme variables lors de l'optimisation de la cartographie 3D.

Si les mouvements détectés sont des vissages à axes parallèles (avec au moins deux axes distincts), les paramètres extrinsèques de translation sauf la translation selon la direction des vissages, sont considérés comme variables, et les paramètres extrinsèques de rotation sont considérés comme variables lors de l'optimisation de la cartographie 3D.

Si le mouvement détecté est un mouvement tridimensionnel, les paramètres extrinsèques de translation sont considérés constants à la valeur initiale ou à une valeur estimée préalablement, et les paramètres extrinsèques de rotation sont considérés comme variables lors de l'optimisation de la cartographie 3D.

En outre, afin de limiter les optimisations de cartographies 3D, il est possible d'optimiser ou non les paramètres extrinsèques en fonction de la longueur des séquences considérées.

Les critères suivants peuvent être appliqués.

Si la séquence possède une longueur inférieure à un seuil déterminé, la séquence est optimisée en considérant les paramètres extrinsèques constants. Les paramètres extrinsèques ne sont donc optimisés que pour les cartographies 3D des séquences possédant une longueur minimale.

Si la séquence possède une longueur inférieure à la séquence la plus longue optimisée en considérant un paramètre extrinsèque variable, alors la cartographie 3D de ladite séquence est optimisée en considérant ledit paramètre extrinsèque comme constant.

Les critères de mouvement du système de vision et de longueur de séquence peuvent être combinés.

Le procédé d'étalonnage peut être mise en oeuvre séquentiellement : le traitement des images par le module de traitement 16 peut être mise en oeuvre après avoir capturé la séquence complète d'images. La capture des images et la reconstruction de la cartographie 3D sont effectuées séquentiellement.

Le procédé d'étalonnage peut être mise en oeuvre au fur et à mesure du déplacement du mobile 2 le long de la trajectoire. La reconstruction de la cartographie 3D au fur et à mesure peut être effectuée en se basant sur les critères de mouvement et les critères de longueur de séquence pour l'optimisation des cartographies 3D en considérant les paramètres extrinsèques comme variables ou constant.

Dans un mode de mise en oeuvre possible, la reconstruction de la cartographie 3D commence sur les séquences élémentaires déjà disponibles. Chaque paramètre extrinsèque est considéré comme fixe ou variable en fonction des critères de mouvement cités précédemment, pour l'optimisation de la cartographie 3D de chaque séquence élémentaire et de chaque séquence de longueur supérieure reconstruite par fusion de cartographies 3D reconstruites préalablement.

De préférence, les cartographies 3D des séquences élémentaires sont optimisées avec des paramètres extrinsèques constants, seules des cartographies 3D de séquences plus longues englobant les séquences élémentaires étant optimisées avec au moins un paramètre extrinsèque considéré comme variable.

Pour une nouvelle pose générant une nouvelle séquence élémentaire, la cartographie 3D de la nouvelle séquence élémentaire est reconstruite, optimisée en considérant les paramètres extrinsèques comme constants et agrégée avec les séquences élémentaires précédentes.

La détection de boucle est mise en oeuvre à chaque nouvelle pose générant une nouvelle séquence élémentaire.

L'optimisation des nouvelles cartographies 3D reconstruites à partir de la nouvelle séquence élémentaire est effectuée en fonction des critères de mouvement et de longueur, dans la mesure où on peut espérer une estimation fiable d'un paramètre extrinsèque si un mouvement suffisant a été effectué pour estimer ce paramètre extrinsèque et dans la mesure où on peut espérer améliorer l'estimation du paramètre extrinsèque si on dispose d'une séquence plus longue que celle à partir de laquelle il a déjà été optimisée.

Avec ce procédé d'étalonnage effectué au fur et à mesure, on obtient à l'issue de l'agrégation une cartographie 3D optimisée de la séquence complète. Cette séquence étant la plus longue, et si la trajectoire d'étalonnage est correctement choisie, la cartographie 3D de la séquence complète d'image sera optimisée en considérant les paramètres extrinsèques comme variables.

Le procédé d'étalonnage a été décrit en relation avec un système de vision par ordinateur à deux caméras à champs non recouvrant. Le procédé d'étalonnage est généralisable à un système de vision par ordinateur comprenant plus de deux caméras.

Le procédé d'étalonnage a été décrit pour l'estimation des paramètres extrinsèques. Il s'applique également aux paramètres intrinsèques du système de vision par ordinateur, aux paramètres de points 3D et/ou aux paramètres de pose.

Ainsi de manière générale, l'invention porte sur un procédé d'étalonnage dans lequel on optimise par ajustement de faisceau une cartographie 3D d'une première séquence en considérant au moins un paramètre parmi les paramètres extrinsèques et/ou les paramètres intrinsèques et/ou les paramètres d'amers 3D et/ou les paramètres des poses, comme contant, et on considère ce au moins un paramètre comme variable pour l'optimisation d'une cartographie 3D d'au moins une deuxième séquence plus longue que la première séquence et englobant la première séquence.

Pour l'optimisation de chaque cartographie 3D, des paramètres extrinsèques et/ou des paramètres intrinsèques considérés constants et non optimisés sont maintenus fixes à une valeur initiale approximative (en l'absence d'optimisation préalable) ou à une valeur estimée lors de l'optimisation d'une autre cartographie 3D réalisée préalablement lors du procédé d'étalonnage.

Pour l'optimisation de chaque cartographie 3D, des paramètres des amers 3D et/ou des paramètres des poses considérés constants et non optimisés sont maintenus fixes à la valeur déterminée dans le calcul de la cartographie 3D qui est optimisée.

Le procédé d'étalonnage est particulièrement avantageux pour les systèmes de vision par ordinateur à caméras à champs non recouvrant, mais s'applique aussi aux systèmes de vision par ordinateur à caméra à champs recouvrant et de manière générales à des systèmes de caméra possédant des caméra à champs recouvrant et/ou des caméras à champs non recouvrant.

Les caméras du système de vision par ordinateur sont de préférence synchronisées pour assurer que les images capturées par les caméras correspondent sensiblement à la même pose du système de vision par ordinateur, en particulier dans les applications dans lesquelles le mobile se déplace rapidement. Dans d'autres applications ne requérant pas un déplacement rapide du mobile, les caméras ne sont pas nécessairement synchronisées, le mobile se déplaçant peu entre les captures d'images par les différentes caméras.

Grâce à l'invention, il est possible de déterminer une cartographie 3D de l'environnement le long d'une trajectoire suivie par un mobile portant un système de vision par ordinateur. La cartographie 3D est précise et déterminée de manière efficace et rapide, avec un temps de calcul réduit, ce qui permet d'envisager une reconstruction en temps réel.

Le procédé d'étalonnage selon l'invention permet de réduire la dérive du facteur d'échelle au cours de la reconstruction de la cartographie 3D. Ceci tient notamment au fait que des paramètres considérés constants pour l'optimisation d'un ensemble de cartographies 3D sont ensuite optimisés pour une cartographie 3D regroupant lesdites cartographies 3D.

Par ailleurs, le mobile 2 étalonné selon le procédé d'étalonnage montre une capacité améliorée à retrouver la trajectoire apprise même lorsqu'il est écarté de cette trajectoire. Le procédé d'étalonnage permet un guidage précis du mobile 2 ainsi étalonné.

Le mobile 2 peut apprendre une trajectoire sans étalonnage dans ce cas, le procédé d'apprentissage est analogue à celui d'étalonnage à ceci près que les paramètres extrinsèques et/ou intrinsèques sont considérés comme constants.

Le mobile 2 peut se déplacer de manière autonome le long d'une trajectoire apprise, identique ou différente de la trajectoire utilisée pour l'étalonnage. Pour ce faire, l'image courante capturée par le système de vision par ordinateur est traitée par recherche d'amers 2D caractéristiques, et comparaison avec les amers de la cartographie 3D de la trajectoire apprise pour déterminer la pose du mobile 2. Le mobile 2 se déplaçant le long de la trajectoire, il est possible d'estimer approximativement sa pose lorsque l'on connaît la pose précédente et par exemple des informations sur le déplacement du système, comme les commandes de déplacement et de direction données par le module de traitement 16. Il est donc possible de déterminer les poses de références de la cartographie 3D proches de la pose courante, et de comparer l'image courante aux amers 3D associés à ces poses. Ceci permet de déterminer rapidement la position du mobile 2, en temps réel.

Dans le cadre de la vision par ordinateur, l'expression « temps réel » signifie que le traitement de chaque image capturée par le système de vision par ordinateur est traité par le module de traitement 16 avant que le rafraîchissement de l'image capturée. Dans le domaine des systèmes de vision par ordinateur, le temps de rafraîchissement est en généralement d'environ 40 ms, ce qui est inférieur au temps de rafraîchissement de la rétine humaine.

Le procédé d'étalonnage selon l'invention ne nécessite par de connaître *a priori* la trajectoire d'étalonnage. Il nécessite de connaître approximativement les paramètres extrinsèques et/ ou les paramètres intrinsèques du système de caméra multiples, le procédé d'étalonnage permettant de déterminer les paramètres extrinsèques et/ou intrinsèques de manière plus précise.

Ainsi, le procédé d'étalonnage peut être mise en oeuvre à distance ou de manière déportée. Dans un tel cas, le mobile est déplacé selon un trajet d'étalonnage, et des images sont capturées par le système de caméra multiple. Ensuite, les images capturées sont envoyées et traitées par un module de traitement distant qui retourne les valeurs estimées des paramètres extrinsèques et/ou des paramètres intrinsèques et/ou des paramètres des poses du système de vision par ordinateur et/ou des paramètres des amers 3D.

Le procédé d'étalonnage peut être utilisé pour déterminer les paramètres extrinsèques et/ou les paramètres intrinsèques dès qu'une modification des ces paramètres est susceptible de s'être produite. Par exemple, un tel procédé d'étalonnage est mis en oeuvre en cas de remplacement d'une des caméras du système de vision par ordinateur, ce qui est susceptible de modifier les paramètres intrinsèques de la caméra changée et les paramètres extrinsèques de l'ensemble de caméra.

Le procédé d'étalonnage peut être utilisé pour calibrer un système de guidage de mobile ou d'un mobile autoguidé, ou pour calibrer un système de caméras multiples d'un système d'assistance à la conduite, tels que ceux utilisés sur les voitures modernes (maintien du mobile en ligne, assistance aux manoeuvres, circulation de mobiles en convoi,...).

## Revendications

1. Procédé d'étalonnage d'un système de vision par ordinateur (10) embarqué sur un mobile (2), comprenant un ensemble de caméras possédant des paramètres extrinsèques et des paramètres intrinsèques, le procédé comprenant la reconstruction d'une cartographie 3D d'amers 3D d'un environnement à partir d'images numériques de l'environnement capturées par le système de vision par ordinateur (10) lors du déplacement du mobile (2) le long d'une trajectoire, chaque image correspondant à un pose du système de vision par ordinateur (10), la cartographie 3D comprenant des coordonnées 3D d'amer 3D et des paramètres de chaque pose, l'étape de reconstruction comprenant des étapes de reconstruction de cartographie 3D de séquences d'images et d'optimisation de ces cartographies 3D par mise en oeuvre d'algorithmes d'ajustement de faisceaux,
le procédé d'étalonnage comprenant l'optimisation d'au moins une cartographie 3D correspondant à une première séquence d'images en considérant au moins un paramètre extrinsèque et/ou au moins un paramètre intrinsèque et/ou au moins un paramètre de pose et/ou une coordonnée 3D d'amer 3D comme constant et l'optimisation d'au moins une cartographie 3D correspondant à une deuxième séquence d'images plus longue que la première séquence d'images et incluant la première séquence d'images, en considérant ledit au moins un paramètre extrinsèque et/ou ledit au moins un paramètre intrinsèque et/ou ledit au moins un paramètre de pose et/ou ladite au moins une coordonnée 3D d'amer 3D comme variable de manière à l'estimer.

2. Procédé selon la revendication 1, dans lequel on optimise une cartographie 3D correspondant à la séquence complète des images prises au cours du déplacement le long de la trajectoire en considérant chaque paramètre extrinsèque et/ou chaque paramètre intrinsèque et/ou chaque paramètre de pose et/ou chaque coordonnée 3D d'amer 3D comme variable.

3. Procédé selon la revendication 1 ou 2, dans lequel on reconstruit des cartographies 3D correspondant à des séquences partielles comprenant seulement une partie des images prises au cours du déplacement le long de la trajectoire en considérant au moins un paramètre extrinsèque et/ou au moins un paramètre intrinsèque et/ou au moins un paramètre de pose et/ou au moins une coordonnée 3D d'amer 3D comme constant(e).

4. Procédé selon la revendication 3, dans lequel on optimise chaque cartographie 3D correspondant à une séquence partielle en considérant chaque paramètre extrinsèque et/ou chaque paramètre intrinsèque et/ou chaque paramètre de pose du système de vision par ordinateur et/ou chaque coordonnée 3D d'amer 3D constant(e).

5. Procédé selon l'une quelconque des revendications précédentes, dans lequel l'étape de reconstruction comprend les étapes suivantes :
- regrouper les images en séquences élémentaires d'images, chaque séquence élémentaire recouvrant la séquence élémentaire suivante ;
- déterminer des cartographies 3D correspondant aux séquences élémentaires,
- optimiser chaque cartographie 3D correspondant à une séquence élémentaire par ajustement de faisceaux,
- agréger les cartographies 3D correspondant aux séquences élémentaires pour obtenir la cartographie 3D de la séquence complète d'images.

6. Procédé selon la revendication 5, dans lequel l'agrégation est réalisée par fusion hiérarchique ascendante en partant des cartographies 3D des séquences élémentaires constituant le niveau inférieur, jusqu'à obtenir la cartographie 3D de la séquence complète, chaque cartographie 3D obtenue par fusion de cartographies étant optimisée par ajustement de faisceaux.

7. Procédé selon la revendication 6, dans lequel au moins une cartographie 3D d'une séquence intermédiaire, englobant une séquence élémentaire et plus longue que la séquence élémentaire, est optimisée en considérant au moins un paramètre extrinsèque et/ou un paramètre intrinsèque et/ou un paramètre de pose du système de vision par ordinateur et/ou une coordonnée 3D d'amer 3D comme constant(e).

8. Procédé selon l'une quelconque des revendications précédentes, dans lequel si un mouvement en ligne droite du système de vision par ordinateur est détecté lors de la reconstruction d'une cartographie 3D d'une séquence, les paramètres extrinsèques de translation sont considérés constants, et au moins un paramètre extrinsèque de rotation est considéré comme variable lors de l'optimisation de la cartographie 3D.

9. Procédé selon l'une quelconque des revendications précédentes, dans lequel si un mouvement dans un plan horizontal non rectiligne du système de vision par ordinateur est détecté lors de la reconstruction d'une cartographie 3D d'une séquence, les paramètres extrinsèques de translation sauf la translation verticale, sont considérés comme variables, et les paramètres extrinsèques de rotation sont considérés comme variables lors de l'optimisation de la cartographie 3D.

10. Procédé selon l'une quelconque des revendications précédentes dans lequel, si des mouvements de vissage à axes parallèles avec au moins deux axes distincts sont détectés lors de la reconstruction d'une cartographie 3D d'une séquence, les paramètres extrinsèques de translation sauf la translation selon la direction des vissages, sont considérés comme variables, et les paramètres extrinsèques de rotation sont considérés comme variables lors de l'optimisation de la cartographie 3D.

11. Procédé selon l'une quelconque des revendications précédentes, dans lequel si un mouvement tridimensionnel est détecté lors de la reconstruction d'une cartographie 3D d'une séquence, les paramètres extrinsèques de translation sont considérés variables et les paramètres extrinsèques de rotation sont considérés comme variables lors de l'optimisation de la cartographie 3D.

12. Procédé selon l'une quelconque des revendications précédentes, dans lequel, si une séquence possède une longueur inférieure à un seuil déterminé, la séquence est optimisée en considérant les paramètres extrinsèques et/ou les paramètres intrinsèques et/ou les paramètres de poses et/ou les coordonnées 3D d'amers 3D comme constants.

13. Procédé selon l'une quelconque des revendications précédentes, dans lequel, si la séquence possède une longueur inférieure à la séquence la plus longue optimisée en considérant un paramètre extrinsèque variable, alors la cartographie 3D de ladite séquence est optimisée en considérant ledit paramètre extrinsèque comme constant.

14. Procédé selon l'une quelconque des revendications précédentes, dans lequel on détecte une fermeture de boucle, et, en cas de détection de fermeture de boucle à partir d'une pose d'une caméra, on ajoute des amers 2D appariés aux poses précédentes de la caméra le long du trajet.

15. Procédé selon la revendication 14 dans lequel pour détecter une fermeture de boucle, on détermine des appariements d'amers 2D entre deux images prises dans deux poses de caméras vérifiant un critère de proximité et on considère qu'une boucle a été fermée si le nombre d'appariements d'amers 2D est supérieur à un seuil.

16. Procédé selon l'une quelconque des revendications précédentes, dans lequel on optimise la cartographie 3D de la séquence complète en utilisant un algorithme du type Levenberg-Marquardt.

17. Procédé selon l'une quelconque des revendications précédentes, comprenant une étape d'acquisition des images.

18. Produit programme d'ordinateur comprenant des instructions logicielles qui lorsqu'elles sont mise en oeuvre par un module de traitement d'information, mettent en oeuvre un procédé d'étalonnage selon l'une quelconque des revendications précédentes.

19. Dispositif d'étalonnage comprenant un module de traitement d'information programmé pour la mise en oeuvre d'un procédé d'étalonnage selon l'une quelconque des revendications 1 à 17.

## Patentansprüche

1. Verfahren zum Kalibrieren eines Computer-basierten Sicht-Systems (10) an Bord eines Fahrzeugs (2), aufweisend eine Menge von Kameras mit extrinsischen Parametern und intrinsischen Parametern, wobei das Verfahren die Rekonstruktion einer 3D-Kartographierung von 3D-Landmarken einer Umgebung ausgehend von digitalen Bildern der Umgebung, erfasst durch das Computer-basierten Sichtsystem (10) während einer Bewegung des Fahrzeugs (2) entlang einer Trajektorie, wobei jedes Bild einer Pose des Computer-basierten Sicht-Systems (10) entspricht, wobei die 3D-Kartographierung 3D-Koordinaten von 3D-Landmarken und Parameter jeder Pose aufweist, wobei der Rekonstruktionsschritt Schritte der Rekonstruktion der 3D-Kartographierung der Bildfolgen und der Optimierung dieser 3D-Kartogrphierungen mittels Durchführen von Bündel-Anpassungsalgorithmen aufweist,
wobei das Kalibrierungsverfahren die Optimierung mindestens einer 3D-Kartographierung, die einer ersten Bildfolge entspricht, unter Betrachtung mindestens eines extrinsischen Parameters und/oder mindestens eines intrinsischen Parameters und/oder mindestens eines Posen-Parameters und/oder einer 3D-Koordinate einer 3D-Landmarke als konstant und die Optimierung mindestens einer 3D-Kartographierung, die einer zweiten Bildfolge entspricht, die länger ist als die erste Bildfolge und die erste Bildfolge enthält, unter Betrachtung des mindestens einen extrinsischen Parameters und/oder des mindestens einen intrinsischen Parameters und/oder des mindestens einen Posen-Parameters und/oder der mindestens einen 3D-Koordinate einer 3D-Landmarke als variabel, in der Art, dass er/sie geschätzt wird, aufweist.

2. Verfahren gemäß Anspruch 1, in dem man eine 3D-Kartographierung, die einer vollständigen, während der Bewegung entlang der Trajektorie aufgenommenen Bildfolge entspricht, unter Betrachtung jedes extrinsischen Parameters und/oder jedes intrinsischen Parameters und/oder jedes Posen-Parameters und/oder jeder 3D-Koordinate einer 3D-Landmarke als variabel optimiert.

3. Verfahren gemäß Anspruch 1 oder 2, in dem man 3D-Kartographierungen, die Teilfolgen, die nur einen Teil der während der Bewegung der Trajektorie aufgenommenen Bilder enthalten, unter Betrachtung mindestens eines extrinsischen Parameters und/oder mindestens eines intrinsischen Parameters und/oder mindestens eines Posen-Parameters und/oder mindestens einer 3D-Koordinate einer 3D-Landmarke als konstant rekonstruiert.

4. Verfahren gemäß Anspruch 3, in dem man jede 3D-Kartographierung, die einer Teilfolge entspricht, unter Betrachtung jedes extrinsischen Parameters und/oder jedes intrinsischen Parameters und/oder jedes Posen-Parameters des Computer-basierten Sicht-Systems und/oder jeder 3D-Koordinate einer 3D-Landmarke als konstant optimiert.

5. Verfahren gemäß einem der vorhergehenden Ansprüche, in dem der Schritt der Rekonstruktion die folgenden Schritte aufweist:
- Zusammenfassen der Bilder in elementare Bildfolgen, wobei jede elementare Bildfolge die folgende elementare Bildfolge umfasst;
- Ermitteln von 3D-Kartographierungen entsprechend der elementaren Folgen,
- Optimieren jeder 3D-Kartographierung entsprechend einer elementaren Folge durch Bündel-Anpassung,
- Zusammenfügen der den elementaren Bildfolgen entsprechenden 3D-Kartographierungen zum Erhalten der 3D-Kartographierung der vollständigen Bildfolge.

6. Verfahren gemäß Anspruch 5, in dem das Zusammenfassen durch eine ansteigende hierarchische Verschmelzung ausgehend von 3D-Kartographierungen von elementaren Folgen, die die untere Ebene bilden, bis zum Erhalten der 3D-Kartographierung der vollständigen Folge aufweist, wobei jede durch Verschmelzung von Kartographierungen erhaltene 3D-Kartographierung durch Bündel-Anpassung optimiert wird.

7. Verfahren gemäß Anspruch 6, in dem mindestens eine 3D-Kartographierung einer Zwischenfolge, die eine elementare Folge umfasst und länger ist als die elementare Folge, unter Betrachtung mindestens eines extrinsischen Parameters und/oder eines intrinsischen Parameters und/oder eines Posen-Parameters des Computer-basierten Sicht-Systems und/oder einer 3D-Koordinate einer 3D-Landmarke als konstant optimiert wird.

8. Verfahren gemäß einem der vorhergehenden Ansprüche, in dem, wenn eine Bewegung auf gerader Linie des Computer-basierten Sicht-Systems während der Rekonstruktion einer 3D-Kartographierung einer Folge detektiert wird, während der Optimierung der 3D-Kartographierung die extrinsischen Parameter als konstant betrachtet werden und mindestens ein extrinsischer Rotationsparameter als variabel betrachtet wird.

9. Verfahren gemäß einem der vorhergehenden Ansprüche, in dem, wenn während der Rekonstruktion einer 3D-Kartographierung einer Folge eine nicht-geradlinige Bewegung des Computer-basierten Sichtsystems in der horizontalen Ebene detektiert wird, während der Optimierung der 3D-Kartographierung die extrinsischen Verschiebeparameter außer der vertikalen Verschiebung als variabel betrachtet werden und die extrinsischen Rotationsparameter als variabel betrachtet werden.

10. Verfahren gemäß einem der vorhergehenden Ansprüche in dem, wenn Schraubbewegungen mit parallelen Achsen mit mindestens zwei unterschiedlichen Achsen während der Rekonstruktion einer 3D-Kartographierung einer Folge detektiert werden, während der Optimierung der 3D-Kartographierung die extrinsischen Verschiebeparameter außer der Verschiebung in der Schraubrichtung als variabel betrachtet werden und die extrinsischen Rotationsparameter als variabel betrachtet werden.

11. Verfahren gemäß einem der vorhergehenden Ansprüche, in dem, wenn während der Rekonstruktion einer 3D-Kartographierung einer Folge eine dreidimensionale Bewegung detektiert wird, während der Optimierung der 3D-Kartographierung die extrinsischen Verschiebeparameter als variabel betrachtet werden und die extrinsischen Rotationsparameter als variabel betrachtet werden.

12. Verfahren gemäß einem der vorhergehenden Ansprüche, in dem, wenn eine Folge eine Länge hat, die geringer ist als ein bestimmter Schwellwert, die Folge unter Betrachtung der extrinsischen Parameter und/oder der intrinsischen Parameter und/oder der Posen-Parameter und/oder der 3D-Koordinaten von 3D-Landmarken als konstant optimiert wird.

13. Verfahren gemäß einem der vorhergehenden Ansprüche, in dem, wenn die Folge eine Länge hat, die geringer ist als die der längsten, unter Betrachtung eines extrinsischen Parameters als variabel optimierten Folge, die 3D-Kartographierung dieser Folge dann unter Betrachtung des extrinsischen Parameters als konstant optimiert wird.

14. Verfahren gemäß einem der vorhergehenden Ansprüche, in dem man einen Ringschluss detektiert und man im Fall der Detektion des Ringschlusses ausgehend von einer Kamerapose 2D-Landmarken, paarweise vorhergehenden Posen der Kamera entlang der Trajektorie zugeordnet, hinzufügt.

15. Verfahren gemäß Anspruch 14, in dem man zum Detektieren eines Ringschlusses das paarweise Auftreten von 2D-Landmarken in zwei Bildern, die in zwei Posen der Kamera aufgenommen wurden, die ein Nachbarschafts-Kriterium erfüllen, ermittelt, und man einen Ring als geschlossen betrachtet, falls die Häufigkeit des Auftretens von 2D-Landmarken größer ist als ein Schwellwert.

16. Verfahren gemäß einem der vorhergehenden Ansprüche, in man die 3D-Kartographierung der vollständigen Folge unter Verwendung eines Algorithmus von Typ Levenberg-Marquardt optimiert.

17. Verfahren gemäß einem der vorhergehenden Ansprüche, aufweisend einen Schritt der Erfassung von Bildern.

18. Computerprogrammprodukt, aufweisend Programminstruktionen die, wenn sie durch ein Informationsverarbeitungsmodul ausgeführt werden, ein Verfahren zum Kalibrieren gemäß einem der vorhergehenden Ansprüche ausführten.

19. Kalibrierungsvorrichtung aufweisend ein Informationsverarbeitungsmodul zum Ausführen eines Verfahrens zum Kalibrieren gemäß einem der Ansprüche 1 bis 17.

## Claims

1. Method for calibrating a computer-based vision system (10) on-board a vehicle (2), comprising a set of cameras having extrinsic parameters and intrinsic parameters, the method comprising the reconstruction of a 3D mapping of 3D landmarks of an environment from digital images of the environment captured by the computer-based vision system (10) during a movement of the vehicle (2) along a trajectory, each digital image corresponding to a pose of the computer-based vision system (10), the 3D mapping comprising 3D landmark 3D coordinates and parameters of each pose, the reconstruction step comprising steps of reconstruction of the 3D mapping of image sequences and optimization of said 3D mappings by implementing bundle adjustment algorithms,
the calibration method comprising the optimization of at least one 3D mapping corresponding to a first image sequence by considering at least one extrinsic parameter and/or at least one intrinsic parameter and/or at least one pose parameter and/or at least one 3D landmark 3D coordinate to be constant, and the optimization of at least one 3D mapping corresponding to a second image sequence longer than the first image sequence and comprising the first image sequence, considering said at least one extrinsic parameter and/or said at least one intrinsic parameter and/or said at least one pose parameter and/or said at least one 3D landmark 3D coordinate to be variable so as to estimate it.

2. Method according to claim 1, in which a 3D mapping is optimized, which mapping corresponds to the complete sequence of images taken during the movement along the trajectory, considering each extrinsic parameter and/or each intrinsic parameter and/or each pose parameter and/or each 3D landmark 3D coordinate to be variable.

3. Method according to claim 1 or 2, in which the 3D mappings are reconstructed, which mappings correspond to partial sequences comprising only a portion of the images taken during the movement along the trajectory, considering at least one extrinsic parameter and/or at least one intrinsic parameter and/or at least one pose parameter and/or at least one 3D landmark 3D coordinates to be constant.

4. Method according to claim 3, in which each 3D mapping is optimized, which mapping corresponds to a partial sequence, considering each extrinsic parameter and/or each intrinsic parameter and/or each computer-based vision system pose parameter and/or each 3D landmark 3D coordinates constant.

5. Method according to any one of the previous claims, in which the reconstruction step comprises the following steps:
- grouping the images into basic image sequences, each basic sequence overlapping with the next basic sequence;
- optimizing each 3D mapping corresponding to a basic sequence by bundle adjustment,
- aggregating the 3D mappings corresponding to the basic sequences in order to obtain the 3D mapping of the complete image sequence.

6. Method according to claim 5, in which the aggregation is performed by an ascending hierarchical fusion based on 3D mappings of basic sequences forming the lower level, until the 3D mapping of the complete sequence is obtained, each 3D mapping obtained by fusion of mappings being optimized by bundle adjustment.

7. Method according to claim 6, in which at least one 3D mapping of an intermediate sequence, comprising a basic sequence and being longer than the basic sequence, is optimized by considering at least one extrinsic parameter and/or one intrinsic parameter and/or one computer-based vision system pose parameter and/or at least one 3D landmark 3D coordinates to be constant.

8. Method according to any one of the previous claims, in which, if a movement in a straight line of the computer-based vision system is detected during the reconstruction of a 3D mapping of a sequence, the extrinsic translation parameters are considered to be constant, and at least one extrinsic rotation parameter is considered to be variable, during the 3D mapping optimization.

9. Method according to any one of the previous claims, in which, if a non-rectilinear movement in a horizontal plane of the computer-based vision system is detected during the reconstruction of a 3D mapping of a sequence, the extrinsic translation parameters, except for that of vertical translation, are considered to be variable, and the extrinsic rotation parameters are considered to be variable during the 3D mapping optimization.

10. Method according to any one of the previous claims, in which, if screwing movements with parallel axes, with at least two distinct axes, are detected during the reconstruction of a 3D mapping of a sequence, the extrinsic translation parameters, except for the translation in the direction of the screwing, are considered to be variable, and the extrinsic rotation parameters are considered to be variable during the 3D mapping optimization.

11. Method according to any one of the previous claims, in which, if a three-dimensional movement is detected during the reconstruction of a 3D mapping of a sequence, the extrinsic translation parameters are considered to be variable and the extrinsic rotation parameters are considered to be variable during the 3D mapping optimization.

12. Method according to any one of the previous claims, in which, if a sequence has a length shorter than a predetermined threshold, the sequence is optimized by considering the extrinsic parameters to be constant and/or the intrinsic parameters and/or the pose parameters and/or the 3D landmark 3D coordinates to be constant.

13. Method according to any one of the previous claims, in which, if the sequence has a length shorter than the longest sequence optimized by considering an extrinsic parameter to be variable, then the 3D mapping of said sequence is optimized by considering said extrinsic parameter to be constant.

14. Method according to any one of the previous claims, in which a closure of a loop is detected and, if a closure of a loop is detected from a camera pose, 2D landmarks matching the previous poses of the camera along the trajectory are added.

15. Method according to claim 14 in which, to detect a closure of loop, 2D landmark matches between two images taken in two camera poses are determined, by verifying a proximity criterion, and it is considered that a loop has been closed if the number of 2D landmark matches is greater than a threshold.

16. Method according to any one of the previous claims, in which the 3D mapping of the complete sequence is optimized by using a Levenberg-Marquardt type algorithm.

17. Method according to any one of the previous claims, comprising an image acquisition step.

18. Computer program comprising software instructions that, when executed by an information processing module, implement a calibration method according to any one of the previous claims.

19. Calibration device comprising an information processing module programmed for implementing a calibration method according to any one of claims 1 to 17.
